# DEMANDE DE BREVET EUROPEEN

(11) **EP 0 713 021 A1**
(43) Date de publication de la demande: **22.05.1996**
(21) Numéro de dépôt: 95402426.1
(22) Date de dépôt: 02.11.1995
(51) Int. Cl.: F16C 19/00, B60C 23/00, F16L 27/087

(54) **Roulement équipé d'un dispositif d'étanchéité pour passage de fluide**

(30) Priorité: 17.11.1994 FR 9413778
(71) Demandeur: SKF FRANCE, F-92142 Clamart Cédex (FR)
(72) Inventeur: Caillault, Claude, F-37390 Saint Roch (FR); Houdayer, Christophe, F-37000 Tours (FR)
(74) Mandataire: Casalonga, Axel

(57) **Abrégé**

Roulement équipé d'un dispositif d'étanchéité pour passage de fluide. Le roulement comprend une bague tournante et une bague non tournante traversées chacune par des canaux (6,7) de passage de fluide, des éléments roulants (3) entre les bagues tournante et non tournante, et un dispositif d'étanchéité (8) monté entre les bagues tournante et non tournante pour former une chambre intermédiaire étanche (14) communiquant avec les canaux (6,7) de passage de fluide. La chambre intermédiaire présente deux parois flexibles (11) dont les parties d'extrémité libre forment deux lèvres d'étanchéité (12) en contact frottant avec une portée (13) de l'une des bagues (2) du roulement. Le dispositif d'étanchéité (8) comprend deux joints coaxiaux réalisés en un matériau souple et maintenus l'un contre l'autre au moyen d'une armature métallique (10), chacun des joints comprenant une couronne de dents axiales (16) séparées entre elles par des espaces circonférentiels. Les dimensions des dents et des espaces qui les séparent sont telles que lorsque les deux joints du dispositif sont maintenus l'un contre l'autre, les dents d'un des joints du dispositif pénètrent entre les dents de l'autre joint du dispositif en formant des canaux radiaux (23) pour l'écoulement du fluide à travers le dispositif.

## Description

La présente invention concerne le domaine des étanchéités pour le passage d'un fluide entre deux pièces dont l'une est animée d'un mouvement de rotation par rapport à l'autre. En particulier, l'invention concerne un roulement équipé d'un passage de fluide qui traverse les bagues tournante et non tournante du roulement, ainsi qu'un dispositif d'étanchéité pour le passage du fluide au travers du roulement.

On connaît par la demande de brevet européen 0 362 921 (SKF) un roulement équipé d'un dispositif d'étanchéité monté entre deux rangées de billes et entre les orifices aménagés sur la bague extérieure et les orifices aménagés sur la bague intérieure du roulement de façon à assurer le passage d'un fluide à travers le roulement. Ce roulement permet d'établir la communication entre deux enceintes contenant un fluide sous pression. Le dispositif d'étanchéité assure d'une part le passage du fluide à travers le roulement et d'autre part empêche le lubrifiant du roulement tel que la graisse de pénétrer dans les zones de passage du fluide dans le roulement. Ce dispositif d'étanchéité présente cependant un encombrement axial important, ce qui peut être incompatible avec certaines applications.

Une application courante de cette technique est destinée au contrôle et à la régulation de la pression des pneumatiques d'un véhicule, le dispositif d'étanchéité pour passage de fluide étant monté dans les roulements de roue du véhicule.

On connaît par le brevet US 48 44 138 un dispositif de passage d'air à travers un roulement au moyen de joints fluides. Ce dispositif très sophistiqué est trop onéreux pour une production en grande série.

On connaît également d'autres dispositifs de passage d'air à travers un moyeu de roue, utilisant une paire de joints d'étanchéité pour assurer le passage étanche de l'air entre les parties tournante et fixe du moyeu (voir par exemple les demandes de brevets européens 0 204 085 et 0 208 540). Chaque joint d'étanchéité comporte une armature métallique sur laquelle est surmoulée une lèvre d'étanchéité. Les joints sont solidarisés à la partie fixe du moyeu par l'intermédiaire de leur armature métallique, leurs lèvres d'étanchéité étant en contact de frottement avec une portée cylindrique aménagée sur la partie tournante du moyeu. Chaque lèvre d'étanchéité est supportée par une portion axiale du joint possédant une certaine flexibilité dans le sens radial. Ainsi, la pression exercée par le fluide sur cette portion axiale supportant la lèvre d'étanchéité se traduit par une certaine pression de contact de la lèvre d'étanchéité sur la portée cylindrique de la partie tournante en plus de la pression de contact due à la précontrainte mécanique de la lèvre d'étanchéité sur la portée cylindrique.

Cependant, la présence d'une portion axiale pour chaque joint afin de supporter sa lèvre d'étanchéité crée un encombrement axial important qui peut être incompatible avec certaines applications.

En outre, des joints séparés nécessitent presque obligatoirement un dispositif de verrouillage axial des joints afin d'éviter un déplacement de ces derniers sous l'effet de la pression.

Un moyen d'éviter tout risque de déplacement axial des joints sous l'effet de la pression du fluide consiste à utiliser un joint monobloc muni de canaux radiaux passant par le corps central du joint comme cela est décrit dans la demande brevet FR 9312517 (SKF).

La fabrication d'un tel type de joint peut cependant s'avérer délicate au niveau de la conception des moules et du démoulage des pièces.

La présente invention a pour objet de remédier aux inconvénients précités des techniques existantes en proposant un roulement équipé d'un dispositif d'étanchéité efficace et économique présentant un encombrement axial réduit pour permettre son intégration facile dans le roulement et ne risquant pas de tourner à cause du frottement des lèvres d'étanchéité sur leur portée de frottement ou de se déplacer axialement sous l'effet de la pression.

Le dispositif d'étanchéité est disposé entre une bague tournante et une bague non tournante d'un roulement afin d'assurer le passage d'un fluide entre lesdites bagues qui sont traversées chacune par des canaux de passage de fluide. Une chambre intermédiaire étanche de forme annulaire est ainsi formée entre les bagues tournante et non tournante du roulement et communique avec les canaux de passage de fluide desdites bagues. Le dispositif d'étanchéité est monté fixe sur l'une des bagues qui peut être tournante ou non tournante, la chambre intermédiaire se prolongeant vers l'autre bague par des parois flexibles dont la partie d'extrémité constitue une lèvre d'étanchéité qui est en contact frottant par rapport à une portée de l'autre bague du roulement.

Selon l'invention, le dispositif d'étanchéité comprend deux joints coaxiaux réalisés en un matériau souple qui sont maintenus l'un contre l'autre au moyen d'une armature métallique. Chacun des joints coaxiaux comprend une couronne de dents axiales séparées entre elles par des espaces circonférentiels. Les dimensions des dents et des espaces qui les séparent sont telles que lorsque les deux joints du dispositif sont maintenus l'un contre l'autre, les dents d'un des joints du dispositif pénètrent entre les dents de l'autre joint du dispositif en formant des canaux radiaux pour l'écoulement du fluide à travers le dispositif.

Le sommet des dents d'un des joints du dispositif vient en appui contre le deuxième joint entre les dents dudit deuxième joint. L'armature métallique est percée d'orifices pour le passage du fluide entre les canaux de la bague extérieure et les canaux radiaux du dispositif. Chaque joint est muni d'une rainure annulaire située sur son périmètre extérieur, entre les orifices de l'armature métallique et les canaux formés entre les dents des deux joints du dispositif de façon à ce que le fluide s'écoule entre lesdits orifices et lesdits canaux. L'armature métallique comprend une portion radiale se raccordant à une portion cylindrique percée de trous pour le passage du fluide, et une deuxième portion radiale sensiblement parallèle à la première portion radiale et formée par rabattement de l'extrémité libre de ladite portion cylindrique.

Avantageusement, l'extrémité libre de la portion cylindrique de l'armature métallique est découpée en une pluralité de languettes axiales destinées à être rabattues de façon à former une deuxième portion radiale sensiblement parallèle à la première portion radiale de l'armature métallique.

L'un des joints du dispositif d'étanchéité peut être surmoulé sur l'armature métallique.

Avantageusement le dispositif d'étanchéité comprend une seconde armature métallique sur laquelle est surmoulé le second joint du dispositif d'étanchéité. Cette seconde armature métallique comprend une portion radiale qui se prolonge par une portion axiale venant en appui contre la portion radiale de la première armature métallique et munie d'orifices pour le passage du fluide.

Les lèvres d'étanchéité du dispositif d'étanchéité pourront comporter dans leur zone de frottement un revêtement antifriction présentant de meilleures caractéristiques de frottement et d'étanchéité par rapport au reste des lèvres. Le produit connu sous le nom de TEFLON est tout à fait satisfaisant à cet égard. Avantageusement, les parois flexibles de la chambre intermédiaire présentent également deux lèvres extérieures secondaires d'étanchéité pour le produit lubrifiant contenu dans le roulement. Les lèvres secondaires d'étanchéité permettent de protéger les zones de frottement des lèvres d'étanchéité au fluide contre le produit lubrifiant du roulement.

L'invention sera mieux comprise à l'étude de la description détaillée de quelques modes de réalisation pris à titre nullement limitatif et illustrés par les dessins annexés, sur lesquels :
la figure 1 est une vue en coupe axiale d'un roulement équipé d'un dispositif d'étanchéité selon un premier mode de réalisation de l'invention,
la figure 2 est une vue partielle en coupe axiale d'un dispositif d'étanchéité avant assemblage,
la figure 3 est une vue en élévation d'un dispositif d'étanchéité déroulé,
la figure 4 est une vue partielle en coupe axiale d'un joint selon un second mode de réalisation de l'invention,
la figure 5 est une vue partielle en coupe axiale de l'armature métallique,
la figure 6 est une vue similaire à la figure 5 représentant un autre mode de réalisation de l'invention,
la figure 7 est une vue partielle en coupe axiale d'un dispositif d'étanchéité lors de l'assemblage,
la figure 8 est une vue similaire à la figure 3 montrant le dispositif d'étanchéité après assemblage,
la figure 9 est une vue partielle en coupe axiale d'un dispositif d'étanchéité avant assemblage selon un troisième mode de réalisation de l'invention,
la figure 10 est une vue partielle en coupe d'un dispositif d'étanchéité déroulé avant assemblage,
la figure 11 est une vue similaire à la figure 9 selon un autre mode de réalisation de l'invention,
les figures 12 et 13 sont des vues similaires à la figure 9 montrant le dispositif d'étanchéité lors de l' assemblage, et
la figure 14 est une vue similaire à la figure 10 du dispositif d'étanchéité après assemblage.

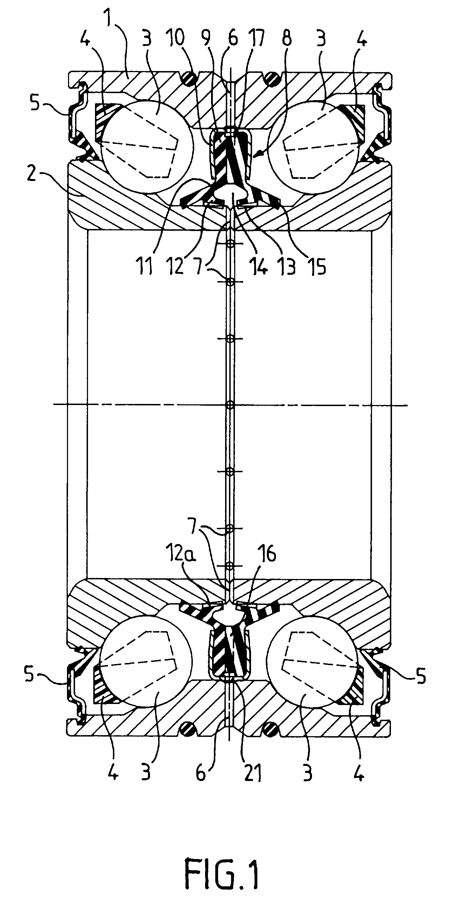

Le roulement illustré sur la figure 1 comprend une bague extérieure 1, une bague intérieure 2 formée par deux demi-bagues accolées axialement, et deux rangées de billes 3 de roulement qui sont espacées circonférentiellement par des cages 4. La bague extérieure 1 et la bague intérieure 2 peuvent être animées d'un mouvement de rotation l'une par rapport à l'autre. La bague extérieure 1 peut être fixe ou tournante.

Le roulement est protégé du milieu extérieur par deux joints d'étanchéité latéraux annulaires 5. Dans un plan radial situé entre les deux rangées de billes 3 se trouvent plusieurs canaux extérieurs radiaux 6 traversant la bague extérieure 1 du roulement, et plusieurs canaux intérieurs radiaux 7 traversant la bague intérieure 2 du roulement. Dans l'espace annulaire formé par les bagues extérieure 1 et intérieure 2 et les deux rangées de billes 3 est monté un dispositif d'étanchéité 8 permettant le passage d'un fluide entre les canaux extérieurs 6 et intérieurs 7 du roulement.

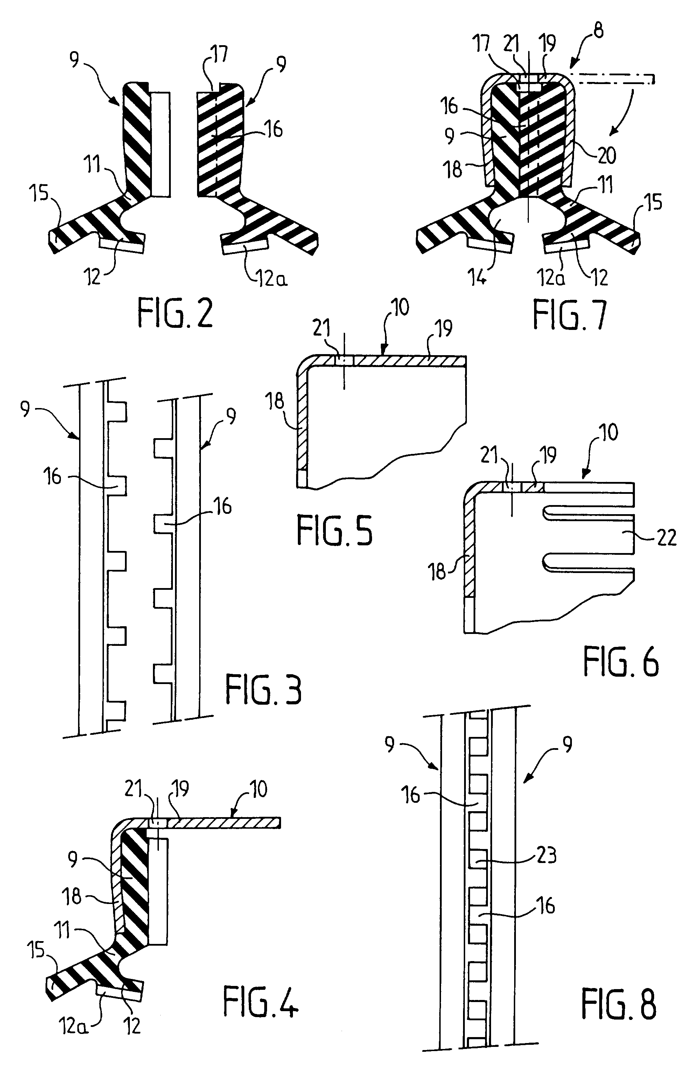

Le dispositif d'étanchéité 8 est formé dans cet exemple de deux parties ou joints séparés 9 annulaires qui sont montés en regard axialement de façon symétrique par rapport au plan radial passant par les canaux extérieurs 6 et intérieurs 7 des bagues de roulement. Les joints 9 seront constitués d'un matériau souple tel que du caoutchouc ou qu'un élastomère. Chaque dispositif d'étanchéité 8 comprend une armature métallique 10 formée par une tôle d'acier emboutie de façon à présenter une partie d'emmanchement axiale cylindrique 19 sur la bague extérieure 1 du roulement et deux parties 18 et 20 de renforcement radial pour chaque joint. La partie cylindrique 19 de l'armature métallique 10 est percée de trous 21 pour permettre le passage du fluide entre les canaux 6 et l'intérieur de ladite armature métallique. Chaque joint 9 se prolonge en une paroi flexible 11 dont l'extrémité libre constitue une lèvre 12 de contact frottant sur une portée annulaire 13 aménagée sur la bague intérieure 2 du roulement. Les deux joints d'étanchéité 9 ainsi montés délimitent une chambre intermédiaire 14 annulaire pour le passage du fluide, la chambre intermédiaire 14 communiquant avec les canaux intérieurs 7 de passage de fluide. Ainsi les deux joints 9 du dispositif d'étanchéité 8 sont maintenus l'un contre l'autre par l'armature métallique. Chaque joint 9 comprend une couronne de protubérances axiales en forme de dents 16 séparées entre elles par des espaces circonférentiels 23, les dimensions des dents et des espaces qui les séparent étant telles que lorsque les deux joints sont solidarisés les dents d'un joint pénètrent entre les dents de l'autre joint en formant des canaux radiaux 23 (figure 8) pour l'écoulement du fluide. Les portées de contact frottant 13 de la bague intérieure 2 sont symétriques par rapport au plan radial passant par les canaux extérieurs 6 et intérieurs 7. Toute variation de pression du fluide sur les faces internes des parois flexibles 11 se traduit par une variation dans le même sens de la pression de contact des lèvres d'étanchéité 12 sur les portées 13.

Afin d'améliorer les caractéristiques de frottement entre les lèvres d'étanchéité 12 et les portées 13 de contact frottant, les zones de frottement des lèvres d'étanchéité 12 sont munies d'un revêtement antifriction 12a, par exemple en TEFLON, qui présente des caractéristiques mécaniques supérieures au caoutchouc ou à l'élastomère constituant le reste des lèvres d'étanchéité 12. Des lèvres d'étanchéité 15 peuvent également être prévues afin de protéger les lèvres d'étanchéité 12 de la graisse de lubrification des billes 3 de roulement. Les lèvres secondaires d'étanchéité 15 peuvent être constituées par deux languettes annulaires extérieures des parois flexibles 11. Ces languettes secondaires 15 s'étendent obliquement et sont en contact frottant sur des portées cylindriques de la bague intérieure 2.

Les figures 2 et 3 montrent les deux joints 9 du dispositif d'étanchéité 8 avant montage selon un mode de réalisation identique à celui de la figure 1. Les deux joints 9 du dispositif d'étanchéité 8 comprennent une pluralité de dents axiales 16. Lors du montage les deux joints 9 sont disposés de telle façon que les dents 16 d'un des joints pénètrent dans l'espace entre deux dents 16 de l'autre joint.

Un second mode de réalisation de l'invention est représenté sur la figure 4. Le joint 9 est réalisé par surmoulage d'un élastomère ou matériau souple analogue directement sur l'armature métallique 10 qui est identique à celle décrite dans le premier mode de réalisation. La face externe du joint 9 vient épouser le contour interne de l'armature métallique. Le joint complémentaire sera identique au joint 9 de la figure 2.

La figure 5 montre une armature métallique telle qu'elle est avant montage. L'armature métallique 10 comprend une partie radiale 18 et une partie axiale cylindrique 19 qui peut être emmanchée dans la bague extérieure 1. Une pluralité de trous 21 sont percés dans la partie cylindrique 19 de façon à permettre le passage du fluide à travers l'armature métallique 10.

La figure 6 montre une armature métallique 10 selon un autre mode de réalisation de l'invention. L'extrémité libre de la partie cylindrique 19 est découpée en une pluralité de languettes 22 de manière à faciliter le rabattement desdites languettes jusqu'à une position radiale pour former la seconde partie radiale de l'armature métallique 10.

La figure 7 montre un dispositif d'étanchéité 8 tel qu'il est après assemblage. Les dents 16 d'un des joints 9 du dispositif d'étanchéité 8 viennent en contact avec l'autre joint du dispositif d'étanchéité 8. L'armature métallique 10, une fois l'extrémité libre de sa partie cylindrique 19 rabattue en position radiale pour former une seconde partie radiale 20, maintient les deux joints 9 du dispositif d'étanchéité 8 en contact l'un contre l'autre. Les dents 16 d'un des joints 9 pénètrent dans l'espace laissé entre les dents de l'autre joint. Chaque joint 9 est pourvu d'une rainure 17 annulaire sur son périmètre extérieur de façon à permettre le passage du fluide entre les orifices 21 de l'armature métallique 10 et les canaux 23 formés entre les dents 16 de chaque joint 9.

La figure 8 montre la configuration des canaux radiaux une fois les joints assemblés. L'espace laissé libre entre chaque dent 16 forme ainsi un canal radial 23 permettant le passage du fluide. Les dents 16 sont de forme rectangulaire, l'imbrication mutuelle des dents des joints permettant ainsi d'éviter tout glissement circonférentiel relatif entre les deux joints 9.

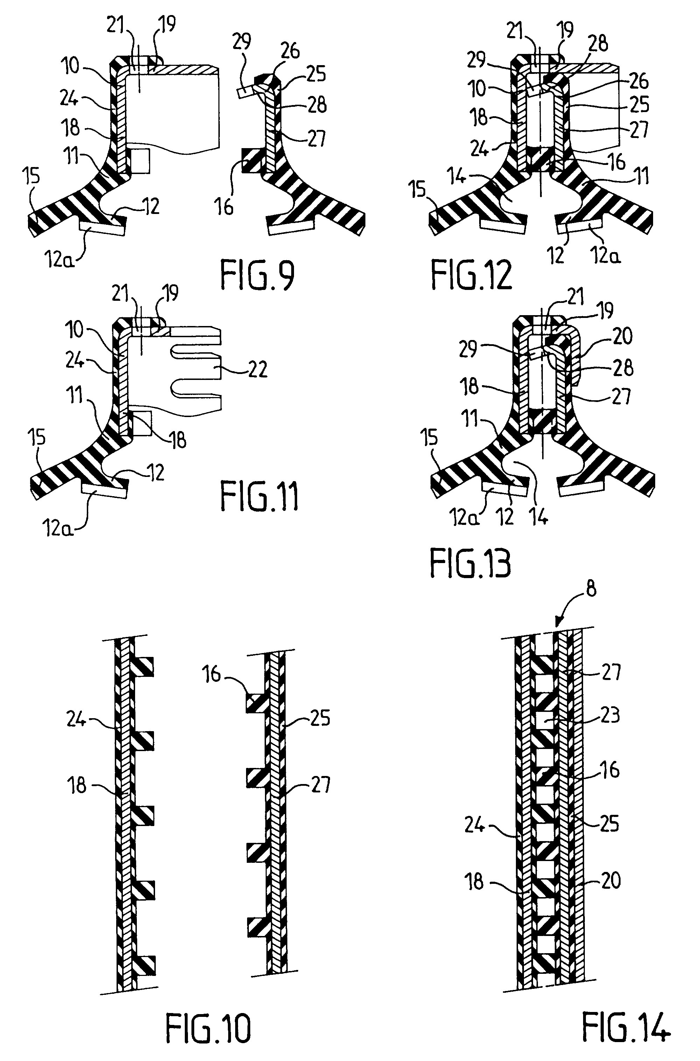

Les figures 9 et 10 montrent un dispositif d'étanchéité 8 selon un troisième mode de réalisation de l'invention, tel qu'il est avant assemblage. L'armature métallique 10 est identique à celle du mode de réalisation précédemment décrit. Le premier joint 24 du dispositif d'étanchéité 8 est surmoulé sur l'armature métallique 10, et comprend une paroi flexible 11, une lèvre d'étanchéité 12 munie d'un revêtement antifriction 12a, une lèvre secondaire d'étanchéité 15 et une pluralité de dents 16. Le dispositif d'étanchéité 8 comprend une seconde armature métallique 26 sur laquelle est surmoulé le second joint 25, qui comprend également une paroi flexible 11 avec une lèvre d'étanchéité 12 munie d'un revêtement antifriction 12a, une lèvre secondaire d'étanchéité 15 et une pluralité de dents 16. La seconde armature métallique 26 comprend une portion radiale 27 et une portion axiale 28 formant entretoise et venant lors de l'assemblage en appui contre la partie radiale 18 de l'armature métallique 10. La partie axiale 28 est munie d'une pluralité d'orifices 29 de façon à ce que le fluide puisse s'écouler.

La figure 11 montre une variante d'exécution de l'armature métallique 10 du dispositif d'étanchéité 8. L'extrémité libre de la partie cylindrique 19 est découpée en une pluralité de languettes 22 aisément rabattables de manière à former une seconde partie radiale 20.

La figure 12 montre le dispositif d'étanchéité 8 après rapprochement des deux joints. Les dents 16 des deux joints viennent s'intercaler et viennent en appui contre les parois de l'autre joint. La partie axiale 28 de l'armature métallique 27 vient également en appui contre la partie radiale 18 de l'armature métallique 10.

La figure 13 montre le dispositif 8 après rabattement de l'extrémité libre de la partie cylindrique 19. L'extrémité libre rabattue de la partie cylindrique 19 forme une seconde partie radiale 20 qui maintient étroitement le second joint 25 du dispositif d'étanchéité 8.

La figure 14 montre le dispositif d'étanchéité 8 après assemblage. Les dents 16 des deux joints 24 et 25 définissent entre elles des canaux de passage 23 du fluide. La seconde partie radiale 20 de l'armature métallique 10 une fois rabattue, empêche tout mouvement axial du second joint 25 du dispositif d'étanchéité 8.

Dans tous les modes de réalisation de l'invention, il est possible de choisir une rigidité de la paroi flexible 11 supportant les lèvres d'étanchéité 12 de telle sorte qu'une pression de contact minimale soit assurée entre la lèvre d'étanchéité 12 et la portée 13 de contact frottant, même pour des pressions faibles de fluide à l'intérieur de la chambre intermédiaire 14.

Ainsi réalisé, le dispositif d'étanchéité est de fabrication simple et d'encombrement réduit et peut être monté dans des roulements sans risque de déplacement des joints.

## Revendications

1. Roulement comprenant une bague tournante et une bague non tournante traversées chacune par des canaux (6,7) de passage de fluide, des éléments roulants (3) entre les bagues tournante et non tournante, et un dispositif d'étanchéité (8) monté entre les bagues tournante et non tournante pour former une chambre intermédiaire étanche (14) communiquant avec les canaux (6,7) de passage du fluide, caractérisé en ce que le dispositif d'étanchéité (8) comprend deux joints(9) coaxiaux réalisés en un matériau souple et maintenus l'un contre l'autre au moyen d'une armature métallique (10), chacun des joints comprenant une couronne de dents axiales (16) séparées entre elles par des espaces circonférentiels, les dimensions des dents (16) et des espaces qui les séparent étant telles que lorsque les deux joints (9) du dispositif sont maintenus l'un contre l'autre, les dents d'un des joints du dispositif pénètrent entre les dents de l'autre joint du dispositif en formant des canaux radiaux (23) pour l'écoulement du fluide à travers le dispositif (8).

2. Roulement selon la revendication 1, caractérisé en ce que le sommet des dents d'un des joints du dispositif vient en appui contre le second joint du dispositif entre les dents dudit second joint.

3. Roulement selon l'une quelconque des revendications précédentes, caractérisé en ce que les dents (16) des deux joints (9) du dispositif (8) ont une section rectangulaire.

4. Roulement selon l'une quelconque des revendications précédentes, caractérisé en ce que, l'armature métallique (10) étant percée d'orifices (21) pour le passage du fluide, chaque joint (9) du dispositif est muni d'une rainure annulaire (17) située entre lesdits orifices (21) et les canaux (23) formés entre les dents (16) des deux joints (9) du dispositif de façon à ce que le fluide s'écoule entre lesdits orifices et lesdits canaux.

5. Roulement selon l'une quelconque des revendications précédentes, caractérisé en ce que l'armature métallique (10) comprend une portion radiale (18) se raccordant à une portion cylindrique (19) percée de trous (21) pour le passage du fluide, et une deuxième portion radiale (20) sensiblement parallèle à la première portion radiale (18) et formée par rabattement de l'extrémité libre de ladite portion cylindrique.

6. Roulement selon la revendication 5, caractérisé en ce que l'extrémité libre de ladite portion cylindrique (19) est découpée en une pluralité de languettes (22) axiales destinées à être rabattues de façon à former une deuxième portion radiale (20) sensiblement parallèle à la première portion radiale(18) de ladite armature métallique.

7. Roulement selon l'une quelconque des revendications précédentes caractérisé en ce que au moins l'un des joints du dispositif d'étanchéité est surmoulé sur l'armature métallique.

8. Roulement selon la revendication 7, caractérisé en ce que le dispositif d'étanchéité comprend une seconde armature métallique (26) sur laquelle est surmoulé le second joint (25) du dispositif d'étanchéité, ladite seconde armature métallique comprenant une portion radiale (27) se prolongeant par une portion axiale (28) venant en appui contre la portion radiale (18) de ladite première armature métallique (10) et munie d'orifices (29) pour le passage du fluide.

9. Dispositif d'étanchéité pour le passage d'un fluide au travers d'un roulement selon l'une quelconque des revendications précédentes, caractérisé en ce qu'il comprend deux lèvres secondaires d'étanchéité (15) en contact de frottement avec une portée cylindrique de la bague intérieure (2) pour protéger les lèvres d'étanchéité (12) de la graisse de lubrification des éléments roulants du roulement.

10. Dispositif d'étanchéité selon la revendication 9, caractérisé en ce que les parties des lèvres d'étanchéité (12) en contact de frottement avec la bague intérieure du roulement sont munies d'un revêtement antifriction (12a).
